# EUROPEAN PATENT SPECIFICATION

(11) **EP 3 265 200 B1**
(45) Date of publication and mention of the grant of the patent: **06.10.2021**
(21) Application number: 16713570.6
(22) Date of filing: 11.02.2016
(51) Int. Cl.: B04C 9/00, C02F 103/00, B01D 21/26, B01D 17/02, B04C 5/13, B04C 5/28, B63J 4/00, B04C 3/06, C02F 1/34

(54) **BALLAST WATER TREATMENT SYSTEM BASED ON WHIRLING MOTION, HYDRODYNAMIC CAVITATION AND VACUUM EFFECT**
BALLASTWASSERAUFBEREITUNGSANLAGE BASIEREND AUF WIRBELBEWEGUNG, HYDRODYNAMISCHER KAVITATION UND VAKUUMEFFEKT
SYSTÈME DE TRAITEMENT D'EAU DE BALLAST BASÉ SUR LE MOUVEMENT TOURBILLONNAIRE, LA CAVITATION HYDRODYNAMIQUE ET L'EFFET DE VIDE

(30) Priority: 05.03.2015 HR 20150258
(43) Date of publication of application: 10.01.2018
(73) Proprietor: Cvetkovic, Martina, 51219 Cavle (HR)
(72) Inventor: Cvetkovic, Martina, 51219 Cavle (HR)
(74) Representative: Dragun, Tihomir
(86) International application number: PCT/HR2016/000006
(87) International publication number: WO 2016/139496

(56) References cited:
- EP-A1- 0 723 813
- WO-A1-03/092902
- FR-A1- 2 343 510
- US-A- 4 276 068
- US-A1- 2008 099 410

## Description

### 1. FIELD OF APPLICATION

The invention relates to the system for treatment of fluids by means of whirling motion, hydrodynamic cavitation and vacuum effect, more precisely, system for treatment of ship's ballast water.

### 2. TECHNICAL PROBLEM

Besides ship fouling and aquaculture, ballast water is among the key factors in carrying alien, invasive aquatic species into the marine ecosystem on the global scale. Ballast water has a particular role in cargo shipping industry. While a ship is loaded with cargo, no ballast water is required, because the cargo itself provides the ship's stability. However, once the cargo is discharged, the ballast is to be loaded once again.

International Maritime Organisation (IMO) has adopted the International Convention on Control and Management of Ship's Ballast Water and Sediments, which stipulates possible ways and methods of discharging ballast water from ships.

The basic requirements set by the Convention related to ballast water treatment devices are high efficiency of the method of removing the targeted organisms, minimum damage to the environment, crew safety, economical and simple application.

The technical problem that is solved by the invention relates to the structure of the appartus for taking untreated ballast water in, treatment of the ballast water, and taking away of the treated ballast water into the ship's tanks.

### 3. STATE OF THE ART

The presently existing ballast water treatment systems have certain drawbacks. Thus, for instance, the presently most widely used ballast water treatment technology, by ultraviolet radiation, has been proven very efficient in destroying a large number of marine organisms. However, related to destruction of cists, permanent stage of a large number of marine organisms, this technology is not efficient enough. Furthermore, some microorganism species have been proven to survive the UV process. The said technology is often accompanied with very high costs of its installation.

On the other hand, the frequently used ballast water treatment system, deoxidation, may be a very efficient option for destruction of certain zooplankton and phytoplankton species, especially if combined with chemicals such as sulphides, or as a step in the so called Venturi Oxygen Stripping technology, where occurs a sudden decrease of dissolved oxygen in the ballast tanks by almost 95%. However, the researches performed so far have proven that certain cist and anaerobic bacteria species may survive the deoxidation process. Furthermore, the costs of the said technology may be very high, and a fully efficient process of ballast water treatment by this technology requires its prolonged application, that consequentially may be quite time consuming.

Most ballast water treatment technologies currently present in the market use various chemicals in the course of their working process, when used as single or combined with other technologies. Methods that use agents in their application mostly require high agent concentrations, and their use consequentially leads to necessity of neutralisation of the treated water before releasing it into the marine ecosystem.

The ballast water treatment by acoustic cavitation has been proven very highly efficient in destroying most part of zooplankton species, but this technology is not efficient enough in destruction of phytoplankton and in decreasing the number of bacteria in the treated water. Examples for such systems can be found in WO2007108012, which uses a vortex diode cavitation, US2007102371, wherein pressure gauges are used as cavitation elements.

The basic technologies of deactivation of live organisms in the ballast water can be divided into four groups: mechanical, physical, chemical and combinations of these. Mechanical methods of deactivation of live organism in ballast water include methods such as filtration, cyclone separation, electro-mechanic separation, etc.

Physical methods mostly include UV radiation, ultrasound, deoxidation, cavitation, thermal treatment, etc.

Chemical methods usually included in the ballast water treatment processes are electrochlorination - electrolysis, biocides, chlorination, ozonisation, coagulation - flocculation, chemical reduction, etc.

Among the most often used combinations of the above mentioned technologies are combinations of mechanical systems and physical disinfection, and of mechanical systems and chemical treatment methods.

### 4. ESSENCE OF THE INVENTION

The essence of the invention is the ballast water treatment system based on whirling motion, hydrodynamic cavitation and vacuum effect. The system working process does not include use of biocides or any other chemicals.

The ballast water treatment system based on whirling effect, hydrodynamic cavitation and vacuum effect comprises unit for bringing the untreated ballast water in, unit for whirling, hydrodynamic cavitation and vacuum effect, and unit for taking the treated ballast water away.

Given the structure of the unit for whirling, hydrodynamic cavitation and vacuum effect, the ballast water treatment system based on whirling, hydrodynamic cavitation and vacuum effect is embodied in the variants I and II as disclosed in claims 1 and 2.

The untreated ballast water enters, through the unit for bringing the untreated ballast water, simultaneously, in the same direction and tangentially into the upper and the lower parts of the unit for whirling, hydrodynamic cavitation and vacuum effect, in all two variants.

The vortex tubes, around which the untreated ballast water or another fluid circles, are positioned one against the other, at a certain distance defined by the system intake parameters.

At the ends of the vortex tubes are fitted nozzles. Because of the water entering the system tangentially, and because of the centrifugal force, the untreated water rotates around the vortex tubes, wherefore are formed two water vortices that join each other in the space between the vortex tubes and the nozzles, where hydrodynamic cavitation and vacuum effect occur. If the system contains air, air bubbles together with the particles of the density lesser than the water density, are partly or fully separated and lifted to the upper part of the treatment, hydrodynamic cavitation and vacuum effect unit, to exit from it through the deaerators. Because of the water whirling motion, the particles of density greater than the water density are pushed towards the bottom of the unit, where they enter into the siphon. The rest of the ballast water flows through both nozzles and vortex tubes, within which hydrodynamic cavitation is formed, and it passes on through the unit for taking the treated ballast water away into the ballast water tanks or it is returned for a repeated treatment.

In all two variants of the unit for whirling, hydrodynamic cavitation and vacuum effect, the unit for bringing the untreated ballast water in and the unit for taking the treated ballast water away are embodied in the same way.

### 5. ILLUSTRATION DESCRIPTIONS

Figure 1 shows the ballast water treatment system based on whirling motion, hydrodynamic cavitation and vacuum effect, variant I - front view.
Figure 2 shows the system shown in the Figure 1, A-A cross section.
Figure 3 shows the system shown in the Figure 1, B-B view.
Figure 4 shows the system shown in the Figure 1, C-C cross section.
Figure 5 shows cylindrical nozzles - front view.
Figure 6 shows the nozzle shown in the Figure 5 - top view.
Figure 7 shows the nozzle shown in the Figure 5 - E-E cross section.
Figure 8 shows schematic view of the enlarged space D in the Figure 4, between cylindrical nozzles and vortex tubes in the chamber, where point 0 is the point where vacuum is being created. From the point 0, vacuum spreads on towards the nozzles where, upon exiting the nozzles up to the points S and T, the hydrodynamic cavitation is spread.
Figure 9 shows the ballast water treatment system based on whirling motion, hydrodynamic cavitation and vacuum effect, variant II - front view.
Figure 10 shows the system shown in the Figure 9, F-F cross section.
Figure 11 shows the system shown in the Figure 9, G-G view.
Figure 12 shows the system shown in the Figure 9, H-H cross section.
Figure 13 shows conical nozzles - front view.
Figure 14 shows the nozzle shown in the Figure 13 - top view.
Figure 15 shows the nozzle shown in the Figure 13 - K-K cross section.
Figure 16 shows schematic view of the enlarged space J in the Figure 12, between the nozzles with the cavitation jet router and vortex tubes in the chamber, where point 0 is the point where vacuum is created. From the point 0, vacuum spreads towards the nozzles where, upon exiting the nozzles up to the points S and T, the hydrodynamic cavitation is spread.
Figure 17 shows the ballast water treatment system based on the whirling motion, hydrodynamic cavitation and vacuum effect, modified variant II - front view.
Figure 18 shows the system shown in the Figure 17, L-L cross section.
Figure 19 shows the system shown in the Figure 17, M-M view.
Figure 20 shows the system shown in the Figure 17, N-N cross section.
Figure 21 shows conical nozzles - front view.
Figure 22 shows the nozzles shown in the Figure 21 - top view.
Figure 23 shows the nozzles shown in the Figure 21 - R-R cross section.
Figure 24 shows schematic view of the enlarged space P in the Figure 20, between nozzles with several cavitation jet routers and vortex tubes in the chamber, where point 0 is the point where vacuum is created. From the point 0, vacuum spreads towards the nozzles where, upon exiting the nozzles up to the points S and T, the hydrodynamic cavitation is spread.

### 6. DETAILED DESCRIPTION OF THE INVENTION EMBODIMENT

### Embodiment description:

The ballast water treatment system based on whirling motion, hydrodynamic cavitation and vacuum effect comprises: unit for bringing the untreated ballast water in, unit for whirling, hydrodynamic cavitation and vacuum effect, and the unit for taking the treated ballast water away.

Given the structure of the unit for whirling, hydrodynamic cavitation and vacuum effect, the ballast water treatment system based on whirling, hydrodynamic cavitation and vacuum effect is embodied in the variants I and II:
Variant I - ballast water treatment system based on whirling, hydrodynamic cavitation and vacuum effect - with unit U for whirling, hydrodynamic cavitation and vacuum effect comprising cylindrical chamber 1, two vortex tubes 2 and cylindrical nozzle 3 at the ends of each vortex tube 2.
Variant II - ballast water treatment system based on whirling, hydrodynamic cavitation and vacuum effect - with unit V for whirling, hydrodynamic cavitation and vacuum effect comprising cylindrical chamber 9, two conical funnels 10, two vortex routers 14, two vortex tubes 2, nozzle 11 with one cavitation jet router 12, at the ends of each vortex tube 2.

In upper and lower part of chamber 1 of the unit U, and in upper and lower part of chamber 9 of the unit V for whirling motion, hydrodynamic cavitation and vacuum effect, there are positioned, one against the other and at a certain distance defined by the system intake parameters, vortex tubes 2 around which circles untreated ballast water or another fluid that is to be treated.

In the whirling units for hydrodynamic cavitation and vacuum effect, embodied by the variants I and II, the unit X for bringing the untreated ballast water in, and the unit Y for taking the treated ballast water away, are embodied in the same way.

The unit X for bringing the untreated ballast water in comprises: common intake tube 20 forking to the tube 21 leading into the upper part, and the tube 22 leading to the bottom part of the units.

In the unit U, the tube 21 enters tangentially the cylindrical chamber 1 in its upper part, whereas the tube 22 enters tangentially the cylindrical chamber 1 in its lower part.

In the unit V, the tube 21 enters the conical funnel 10 in its upper part, whereas the tube 22 enters the conical funnel 10 in its lower part.

The unit Y for taking the treated ballast water away comprises: tube 23 for taking the treated ballast water away from the upper part of the cylindrical chamber 1 of the unit U, from upper parts of the conical funnels 10 of the unit V, and tube 24 for taking the treated ballast water from the lower part of the cylindrical chamber of the unit U, and lower parts of the conical funnels 10 of the unit V, and the common outlet 25 into

the treated ballast water tank.

The ballast water treatment system based on whirling, hydrodynamic cavitation and vacuum effect, embodied in the variants, reaches its working efficiency when working with low intake pressure, as low as around 0.8 bars, which is important when treating ship ballast water. The working efficiency of the system rises proportionally with the increase of the system intake pressure. The system removes very efficiently marine microorganisms - zooplanktons (nauplii, copepods and cists), phytoplankton and marine bacteria.

The ballast water treatment system based on whirling, hydrodynamic cavitation and vacuum effect, embodied in the variants, provides a complete ecological solution for ballast water treatment, with no hazards for the environment and the ship's crew.

The ballast water treatment system based on whirling, hydrodynamic cavitation and vacuum effect, embodied in the variants, besides for treatment of ballast waters, can also be used for disinfection, purification or sterilisation of various fluids, and for destruction of various sorts, forms and stages of microorganisms in fluids.

The system generates significantly lower noise level in relation to similar existing ballast water treatment systems, during the course of the working process.

Resulting from ballast water rotation, in the water vortex centre, between vortex tubes and nozzles, water steam will appear. The water steam pressure value is always negative, and depends on the pressure at the system intake. Thus, if pressure at the system intake is higher, water steam pressure will be lower, that is, it will reach a greater negative value. This phenomenon is considered the key parameter at destroying most microorganisms of various sizes, forms and development stages.

Chambers 1 and 9 are designed to enable fast water outflow to the chamber's bottom, that is, to the outlet 8 for particles of the density greater than water density, and free flow of sediment through the outlet 17 at the bottom of the chamber and the conical funnels. The distance between the vortex tubes can be adjusted as required, depending on the system intake parameters. The role of the conical funnels in the chambers of the units V and Z is to precisely direct water jet to the area of joining of the two vortices, to increase the speed of the water jet 27, to encourage spreading of hydrodynamic cavitation when passing through the nozzles, and to create the vacuum effect in the area between the nozzles.

### The system embodied in the variant I:

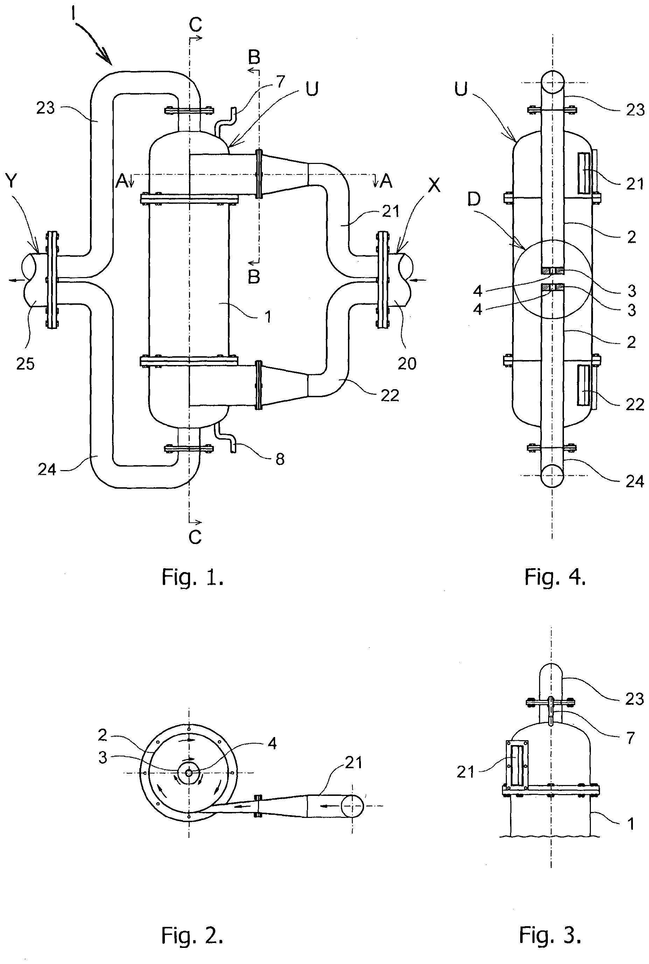

Fig.1 shows the ballast water treatment system based on whirling, hydrodynamic cavitation and vacuum effect, embodied in the variant I, with unit U for whirling, hydrodynamic cavitation and vacuum effect, with unit X for bringing the untreated ballast water in, and the unit Y for taking the treated ballast water away.

The unit U for whirling, hydrodynamic cavitation and vacuum effect comprises cylindrical chamber 1, two vortex tubes 2 and cylindrical nozzle 3 at the ends of each vortex tube 2.

The cylindrical chamber 1 has usually cylindrical shape, with two symmetrical vortex tubes 2 positioned symmetrically in the central part of the cylindrical chamber. The upper and the lower vortex tubes 2 are positioned at the same level, and turned one against the other, so that between the vortex tubes there is a certain distance that can be adjusted, the distance is defined by the system intake parameters. At ends of both vortex tubes 2 there are cylindrical nozzles 3.

Untreated water arrives through the unit X for bringing the untreated ballast water in, simultaneously and in the same direction, through the upper intake 21 and the lower intake 22, entering tangentially the unit U for whirling, hydrodynamic cavitation and vacuum effect. The system can work correctly also if the ballast water entered the chamber in different directions, but its overall effect can be decreased, wherefore turbulence within the vortex tube may be increased. Driven by the centrifugal force, the ballast water rotates around the vortex tube 2, wherefore two water vortices appear. The upper and the lower vortices join each other in the space between the vortex tubes 2 and the nozzles, where also appears the vacuum effect. Joining of the two vortices 5 results in increasing the rotation speed of the water jet 27, that consequentially brings to:
a) dispersion of particles of the density greater than water density, towards the cylindrical chamber walls, resulting from the inertia force. The water whirling motion drives particles towards outer parts of the lower tube, and they continue descending towards the bottom of the chamber, outlet 8.
b) water flowing through the symmetrically positioned cylindrical nozzles 3, this causing hydrodynamic cavitation at the outlet of the cylindrical nozzles. The hydrodynamic cavitation formation is positioned not to touch the chamber walls or any other chamber element, except for the nozzles.
c) water flowing through the symmetrically positioned cylindrical nozzles 3, this causing creation of water steam between the cylindrical nozzles. When the pressure at the chamber intake is between 0.8 and 1.8 bars, the water steam pressure between the cylindrical nozzles will be decreased to -1.2 bars, where hydrodynamic cavitation, that is under-pressure, in the point 0 will appear. The vacuum will spread through the nozzles into the inner part of the vortex tubes 2, where hydrodynamic cavitation will appear. The hydrodynamic cavitation will appear symmetrically, at the same places in both vortex tubes. In cases of higher intake pressures, the negative vacuum value will increase, this increasing the entire system efficiency. At lower intake pressures, recommended is decreasing the distance between the nozzles, whereas at higher intake pressures, recommended is increasing the distance between the nozzles.

At the upper end of the cylindrical chamber 1 there is the outlet 7 for air bubbles and particles of lesser density than water density, and at the lower end there is the outlet 8 for sediment. The ballast water now leaves, through the opening 4 of the cylindrical nozzles 3 and the vortex tubes 2, through the upper outlet 23 and the lower outlet 24 and the common outlet 25, of the unit Y for taking the treated ballast water away, into the ballast water tanks. If necessary, the treated ballast water can be returned into the treatment system.

Fig.2 and 4 show cross sections A-A and C-C through the unit U for whirling, hydrodynamic cavitation and vacuum effect. Fig.3 shows the B-B view, with the tangential intake 21 of the unit X, to the upper part of the unit U.

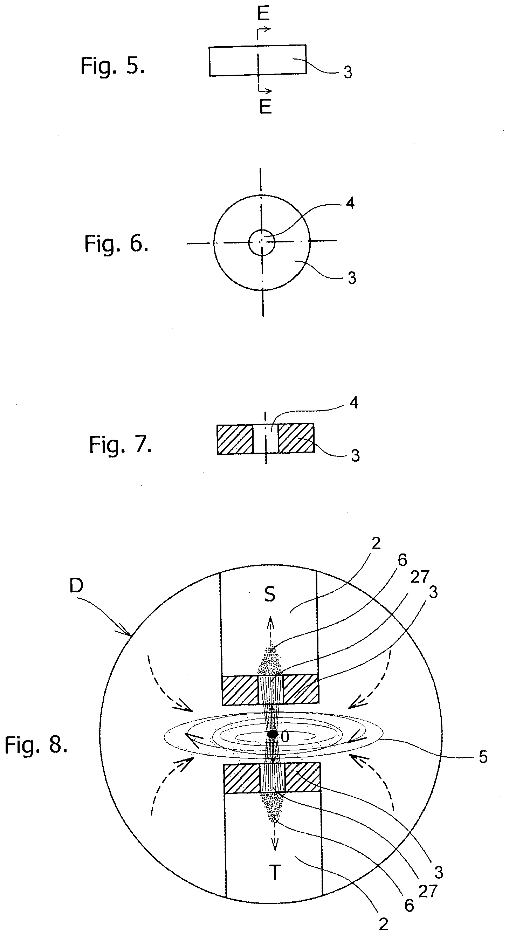

Fig.5, 6 and 7 show the cylindrical nozzle 3, front and top views, and the E-E cross section from the Fig.5.

In the centre of the cylindrical nozzles 3 is the opening 4, whose diameter depends on the intake tube dimensions and the untreated water pump characteristics. The height of the cylindrical nozzle 3 is an essential factor of the system functional operation, and is directly connected with forming the cavitation.

Fig.8 shows schematically the enlarged part D of the Figure 4, showing water steam creation in the water vortex in the space of joining of the two vortices. Water steam will be created around the vortex central point 0, where occurs mutual action of shear, tension and torsion forces and the vacuum effect - under-pressure. The vacuum will spread further, through openings 4 of the cylindrical nozzles 3, from the point 0 into the inner parts of the vortex tube 2, to the points S and T, where also hydrodynamic cavitation will spread, symmetrically in both vortex tubes 2.

### The system embodied in the variant II:

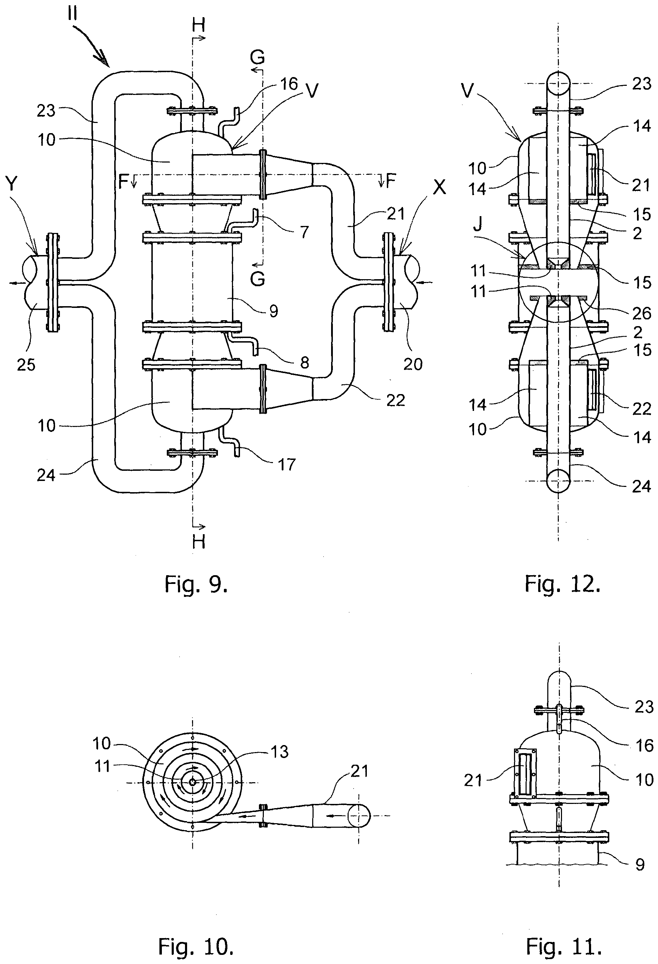

Fig.9 shows the ballast water treatment system based on whirling, hydrodynamic cavitation and vacuum effect, embodied in the variant II, with unit V for whirling, hydrodynamic cavitation and vacuum effect, with unit X for bringing the untreated ballast water in, and the unit Y for taking the treated ballast water away.

The unit V for whirling, hydrodynamic cavitation and vacuum effect comprises cylindrical chamber 9, two conical funnels 10, two vortex tubes 2, two vortex routers 14, nozzles 11 at the end of each vortex tube 2, and sediment router 26.

The upper and the lower conical funnels 10 are partly, with their conical parts, inserted into the upper and lower parts of the cylindrical chamber 9. Within the conical funnels 10 there are two symmetrical vortex tubes 2, ending with nozzles 11. The upper and the lower vortex tubes 2, which pass through the conical funnels 10, are positioned at the same level and are turned towards each other. Between the vortex tubes 2 there is a certain distance that depends on the parameters of water entering the system. At lower intake pressures, the distance between the vortex tubes 2, that is, the nozzles 11, is decreased, whereas at higher intake pressures, the distance between the vortex tubes 2, that is, the nozzles 11, is increased.

The vortex tubes 2, within the conical funnels 10, are positioned roughly symmetrically. Symmetrical structure is recommended for achieving better effects, but the system can function correctly also with lesser deviations in the vortex tubes symmetry.

The role of the conical funnels 10 in the cylindrical chamber 9 is to precisely direct water jet to the area of joining of the two vortices, to increase the water jet speed, and to create the hydrodynamic cavitation and vacuum effect while passing through the nozzles 11. Untreated water arrives tangentially into the upper and the lower conical funnels 10 of the unit V for whirling, hydrodynamic cavitation and vacuum effect, simultaneously and in the same direction, through the upper intake 21 and the lower intake 22 of the unit X. The system can work correctly also if the ballast water entered the chamber in different directions, but its overall effect can be decreased, wherefore turbulence within the tube may be increased. Driven by the centrifugal force, the water rotates around the vortex tube 2, wherefore two water vortices appear. The upper and the lower vortices join each other in the space between the vortex tubes. At both vortex tubes intakes appears hydrodynamic cavitation, and also vacuum effect. Joining of the two vortices 5 results in increasing the rotation speed of the water jet 27, that consequentially brings to:
a) dispersion of particles of the density greater than water density, towards the cylindrical chamber 9 walls, resulting from the inertia force. The water whirling motion drives particles towards outer parts of the lower conical funnel 10, and they continue descending towards the sediment outlet 17.
b) water flowing through the symmetrically positioned nozzles 11, this causing hydrodynamic cavitation at the outlet of the nozzles 11 and the vortex tubes 2. The hydrodynamic cavitation formation is positioned not to touch the chamber walls or any other chamber element, except for the nozzles.
c) water flowing through the nozzles 11, this causing creation of water steam between the cylindrical nozzles. When the pressure at the chamber intake is between 0.8 and 1.8 bars, the water steam pressure between the nozzles will be decreased to -1.2 bars, and vacuum, that is under-pressure, will appear. The vacuum will spread into the inner part of the vortex tubes 2, where hydrodynamic cavitation will appear. The hydrodynamic cavitation will appear symmetrically, at the same places in both vortex tubes. In cases of higher intake pressures, the negative vacuum value will increase, this increasing the entire system efficiency. At lower intake pressures, recommended is decreasing the distance between the nozzles, whereas at higher intake pressures, recommended is increasing the distance between the nozzles 11.

Semi-permeable reticular barrier 15, positioned at the bottom of the vortex router 14 and at the end of upper conical funnel 10, separates the upper part from the lower part of the cylindrical chamber 9. The semi-permeable barrier 15 is constructed to let air bubbles 6 through to the upper part of the conical funnel 10, that is, to the air bubbles outlet 16. The purpose of the semi-permeable barrier is to stop further flow of the ballast water towards the top of the cylindrical chamber.

Aimed to better performance, the described structure additionally uses vortex router 14. The vortex router 14 is located symmetrically within the upper and the lower conical funnels. The role of the router in the upper conical funnel is to catch air bubbles and particles of density lesser than water, which will be ejected from the system through the upper outlet 16. The vortex router 14 positioned in the lower conical funnel 10 helps at directing the water jet more precise.

Fig.10 and 12 show cross sections F-F and H-H through the unit V for whirling, hydrodynamic cavitation and vacuum effect. Fig.11 shows the G-G view, with the tangential intake 21 of the Unit X to the upper conical funnel of the unit V.

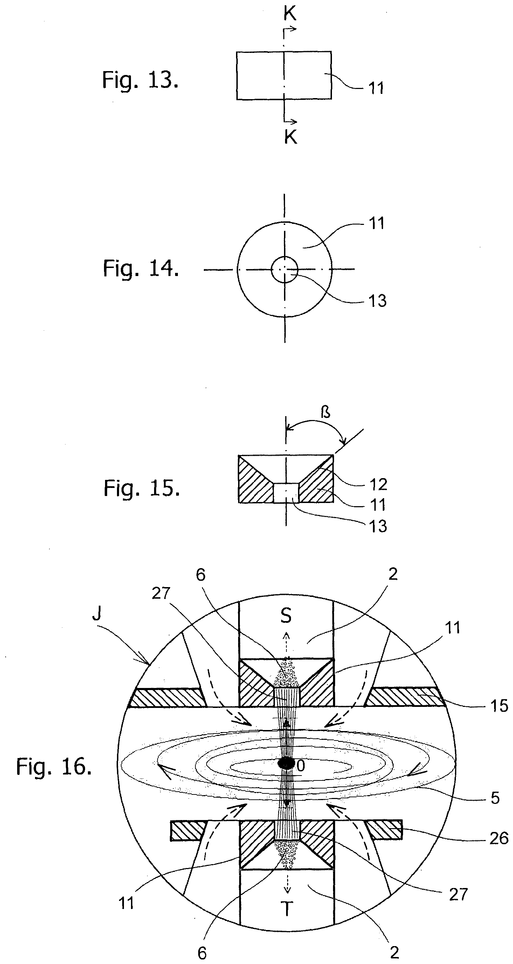

Fig.13 and 14 show the nozzle 11 with the opening 13 and one cavitation jet router 12, front and top views, whereas the Fig.15 shows the K-K cross section from the Fig.13.

In the centre of the nozzles 11 is the opening 13, whose diameter depends on the intake tube dimensions and the characteristics of the pump for bringing sea water in. The nozzles 11 have one cavitation jet router 12. The cavitation jet router 12 inclination, relative to the nozzle symmetry, is at the angles β = 50° to 70°. The height of the cylindrical part of the nozzle 11 is an essential factor of the system functional operation, and is directly connected with forming the cavitation.

Fig.16 shows schematically the enlarged part J of the Fig.12, showing water steam creation in the water vortex in the space of joining of the two vortices between the vortex tubes and the nozzles. Water steam will be created around the vortex central point 0, where occurs mutual action of shear, tension and torsion forces and appears the vacuum effect - under-pressure. The vacuum will spread further, through openings 13 of the nozzles 11, from the point 0 into the inner parts of the vortex tube 2, to the points S and T, where also hydrodynamic cavitation will spread, symmetrically in both vortex tubes.

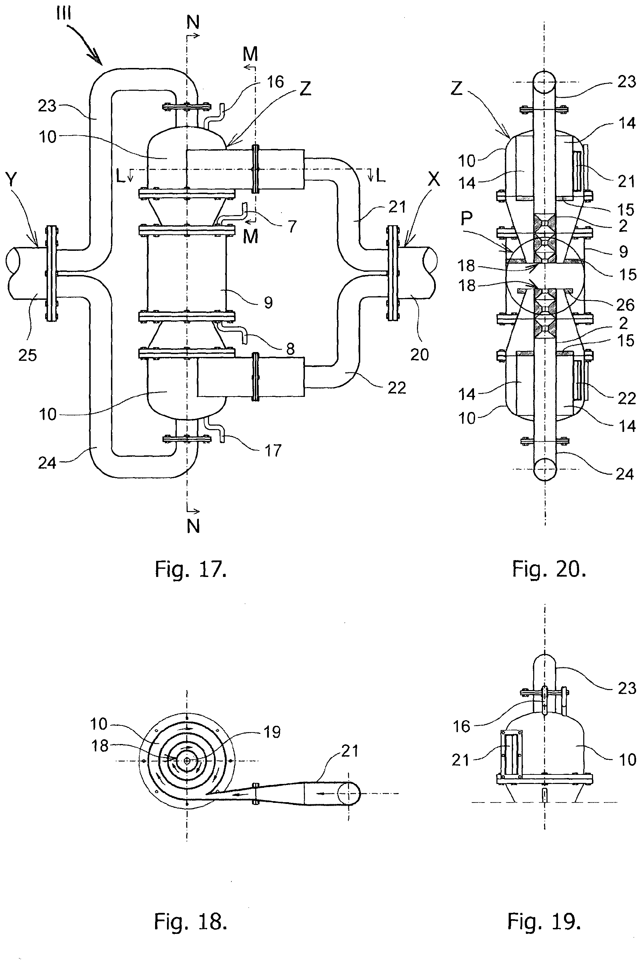

**The system embodied in the** modified variant II: Fig.17 shows the ballast water treatment system based on whirling, hydrodynamic cavitation and vacuum effect, embodied in the modified variant II, with unit Z for whirling, hydrodynamic cavitation and vacuum effect, with unit X for bringing the untreated ballast water in, and the unit Y for taking the treated ballast water away.

The unit Z for whirling, hydrodynamic cavitation and vacuum effect comprises cylindrical chamber 9, two conical funnels 10, two vortex tubes 2, two vortex routers 14, two nozzles 18 within each vortex tube 2, and sediment router 26.

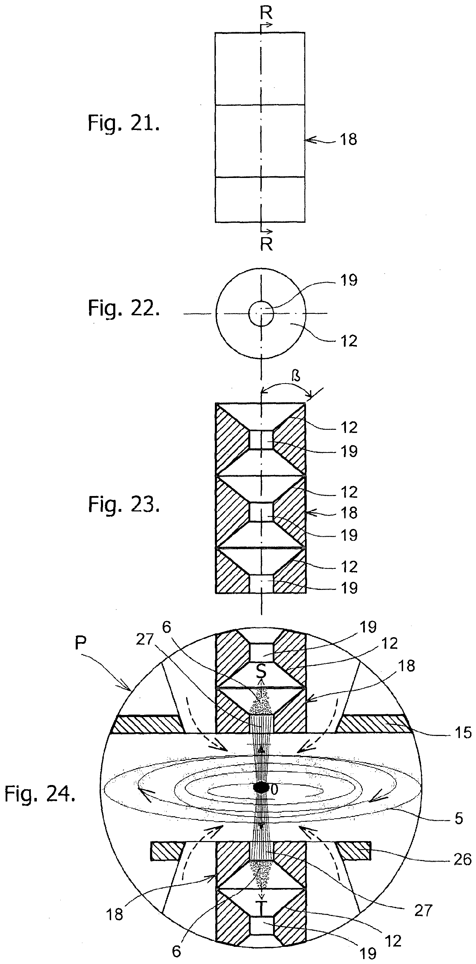

The upper and the lower conical funnels 10 are partly, with their conical parts, inserted into the upper and lower parts of the cylindrical chamber 9. The construction of nozzles 18 is that each has several cavitation jet routers 12, this making them better suited for working with lesser flows. Namely, because of the vortex tube 2 inner construction, water in the vortex tube cannot achieve large velocities and flows. The nozzle 18, in the example shown in the invention, will create triple cavitation in each vortex tube 2. Also, in the space between the upper and the lower nozzle 18 vacuum effect will appear, that will spread symmetrically through the nozzles into both vortex tubes 2, to the points S and T, to which the hydrodynamic cavitation will spread, as shown in the Fig.24.

Untreated ballast water, as shown in the Fig.19, arrives tangentially into the unit Z for whirling, hydrodynamic cavitation and vacuum effect, simultaneously and in the same direction, through the upper intake 21 and the lower intake 22. The system can work correctly also if the ballast water entered the chamber in different directions, but its overall effect can be decreased, wherefore turbulence within the tube may be increased. Driven by the centrifugal force, the water rotates around the vortex tube 2, wherefore two water vortices appear. The upper and the lower vortices join each other in the space 0 between the vortex tubes and the nozzles 18. At both vortex tubes intakes appears hydrodynamic cavitation. The upper and lower vortices join each other in the space between two vortex tubes 2 and the nozzles 18, where also appears vacuum effect. Joining of the two vortices 5 results in increasing the rotation speed of the water jet 27, that consequentially brings to:
a) dispersion of particles of the density greater than water density, towards the cylindrical chamber 9 walls, resulting from the inertia force. The water whirling motion drives particles towards outer parts of the lower conical funnel 10, and they continue descending towards the outlet 17 for larger particles and sediment.
b) water flowing through the symmetrically positioned nozzles 18 in the vortex tubes 2, this causing hydrodynamic cavitation at the outlet of the nozzles in the vortex tubes 2. The hydrodynamic cavitation formation is positioned not to touch the chamber 9 walls or any other chamber element, except for the nozzles 18.
c) water flowing through the nozzles 18 with several cavitation jet routers 12, this causing creation of water steam between the nozzles. When the pressure at the chamber 9 intake is between 0.8 and 1.8 bars, the water steam pressure between the nozzles 18 will be decreased to -1.2 bars, and hydrodynamic cavitation, that is under-pressure, will appear. The vacuum will spread into the inner part of the vortex tubes 2, where hydrodynamic cavitation will appear. The hydrodynamic cavitation will appear symmetrically, at the same places in both vortex tubes. In cases of higher intake pressures, the negative vacuum value will increase, this increasing the entire system efficiency. At lower intake pressures, recommended is decreasing the distance between the nozzles 18, that is, the vortex tubes 2, whereas at higher pressures, recommended is increasing the distance between the vortex tubes with nozzles 18.

Semi-permeable reticular barrier 15, positioned at the end of the vortex router 14 and at the bottom of the upper conical funnel 10, separates the upper part from the lower part of the cylindrical chamber 9. The semi-permeable barrier 15 is constructed to let air bubbles through to the upper part of the chamber, that is, to the air bubbles outlet 16. The purpose of the semi-permeable barrier is to stop further flow of the ballast water towards the top of the conical funnels.

Aimed to better performance, in the conical funnels 10 fitted are vortex routers 14. The vortex routers 14 are located symmetrically within the upper and the lower conical funnels 10. The role of the vortex router 14 in the upper conical funnel is to catch air bubbles 6 and particles of density lesser than water that will be ejected from the unit Z through the upper outlet 16. The vortex router 14 positioned in the lower conical funnel 10 helps at directing the water jet more precise.

The role of the conical funnels 10 in the cylindrical chamber 9 is to precise direct the water jet towards the space where the two vortices join, to increase the water jet velocity and to encourage forming of the hydrodynamic cavitation while passing through the nozzles 18 with several cavitation jet routers 12.

Fig.18 and 20 show cross sections L-L and N-N through the unit Z for whirling, hydrodynamic cavitation and vacuum effect. Fig.19 shows the M-M view, with the tangential intake 21 of the unit X to the upper part of the unit V.

Fig.21 and 22 show the nozzle 18 with several cavitation jet routers 12, front and top views, whereas the Fig.23 shows the R-R cross section from the Fig.21.

In the centre of the nozzles 18 is the opening 13, whose diameter depends on the intake tube dimensions and the characteristics of the pump for bringing sea water in. The cavitation jet router 12 inclination, relative to the nozzle symmetry, is at the angles β = 50° to 70°. The height of the cylindrical part of the nozzle 18 is an essential factor of the system functional operation, and is directly connected with forming the cavitation.

Fig.24 shows schematically the enlarged part P of the Fig.20, showing water steam creation in the water vortex in the space of joining of the two vortices. Water steam will be created around the vortex central point 0, where occurs mutual action of shear, tension and torsion forces and appears the vacuum effect - under-pressure. The vacuum will spread further, through the nozzle 18, from the point 0 into the inner parts of the vortex tube 2, to the points S and T, where also hydrodynamic cavitation will spread, symmetrically in both vortex tubes in upper and lower part of cylindrical chamber.

### LIST OF LETTER AND NUMERICAL REFERENCES USED IN DESCRIPTION AND ILLUSTRATIONS

I - variant of the ballast water treatment system based on whirling, hydrodynamic cavitation and vacuum effect having cylindrical chamber, two vortex tubes and a cylindrical nozzle at the ends of each vortex tube
U - Unit for whirling, hydrodynamic cavitation and vacuum effect in the system according to the variant I
1 - Cylindrical chamber
2 - Vortex tube
3 - Cylindrical nozzle
4 - Opening in the cylindrical nozzle
5 - Schematic presentation of the vortex
6 - Schematic presentation of air bubbles
27 - Schematic presentation of water jet
7 - Outlet from chamber for air bubbles and particles of the density lesser than water density
8 - Outlet from chamber for particles of the density greater than water density into siphon
II - variant of the ballast water treatment system based on whirling, hydrodynamic cavitation and vacuum effect having cylindrical chamber with two conical funnels and two vortex routers, with two vortex tubes, and nozzle with one cavitation jet router at ends of each vortex tube
V - Unit for whirling, hydrodynamic cavitation and vacuum effect in the system according to the variant II
9 - Cylindrical chamber
10 - Conical funnel
2 - Vortex tube
11 - Nozzle with one vortex jet router
12 - Cavitation jet router on nozzle
13 - Opening in nozzle
14 - Vortex routers
26 - Sediment router
15 - Semi-permeable barrier
7 - Outlet from chamber for air bubbles and particles of the density lesser than water density
8 - Outlet from chamber for particles of the density greater than water density into siphon 16 - Outlet from conical funnel for air bubbles
17 - Outlet from conical funnel for sediment
18 - Nozzle with several vortex jet routers
19 - Opening in nozzle with several cavitation jet routers
X - Unit for bringing the untreated ballast water in the systems according to the variants I, II and III
20 - Common intake tube
21 - Upper intake
22 - Lower intake
Y - unit for taking the treated ballast water away in the systems according to the variants I, II and III
23 - Upper outlet
24 - Lower outlet
25 - Common outlet
D - schematic view of the enlarged space between cylindrical nozzles and vortex tubes in chamber, according to the variant I
J - schematic view of the enlarged space between cylindrical nozzles and vortex tubes in chamber, according to the variant II
P - schematic view of the enlarged space between cylindrical nozzles and vortex tubes in chamber, according to the modified variant II
0 - point of creation of vacuum and hydrodynamic cavitation between vortex tubes, according to the variants I and II
S and T - points in vortex tubes up to where the hydrodynamic cavitation created in nozzles spreads

### 7. INVENTION APPLICATION

Besides in treating ship ballast water, the invention can also be applied for treating other fluids in various fields and aimed to their disinfection, purification or sterilisation, removal and physical destruction of microorganisms of various sorts, forms and stages in fluids.

## Claims

1. Ballast water treatment system based on whirling motion, hydrodynamic cavitation and vacuum effect the system comprising a unit (U) for whirling, hydrodynamic cavitation and vacuum effect, unit (X) for bringing the untreated ballast water in the unit (U) and a unit (Y) for taking the treated ballast water away from the unit (U) **characterised by that** the unit (U) for whirling, hydrodynamic cavitation and vacuum effect comprises a cylindrical chamber (1), upper and lower vortex tubes (2), upper and lower cylindrical nozzles (3), an outlet (7) and an outlet (8) from the chamber; the upper and lower vortex tubes (2) are positioned through the centre of the chamber (1), symmetrically and turned one towards the other, at a distance defined by the system intake parameters; at the ends of the upper and lower vortex tubes (2) are fitted nozzles (3); wherein to the upper and lower parts of the chamber (1) are tangentially connected upper intake (21) and lower intake (22) from the unit (X) for bringing the untreated ballast water in; through the outlet (7) from the chamber (1) exit air bubbles (6) and particles of the density lesser than water density; through the outlet (8) from the chamber (1) exit particles of the density greater than water density; in the space between the upper and the lower vortex tubes (2), at the place where two vortices join, the hydrodynamic cavitation forms in point (0); the ballast water passes forming a jet (27), through openings (4) in the upper and the lower nozzles (3) into the upper and the lower vortex tubes (2), and through upper tube (23), lower tube (24), and common outlet (25) of the unit (Y) for taking the ballast water away, into ballast water tanks.

2. Ballast water treatment system based on whirling motion, hydrodynamic cavitation and vacuum effect the system comprising a unit (V) for whirling, hydrodynamic cavitation and vacuum effect, a unit (X) for bringing the untreated ballast water in and a unit (Y) for taking the treated ballast water away, **characterised by that** the unit (V) for whirling, hydrodynamic cavitation and vacuum effect comprises cylindrical chamber (9), upper and lower conical funnels (10), upper and lower vortex tubes (2), upper and lower vortex routers (14), upper and lower nozzles (11), semi-permeable barrier (15), sediment router (26) for prevention of sediment retention and outlets (7, 8, 16, 17), wherein the upper and lower conical funnels (10) are positioned at upper and lower sides of the chamber (9), partly in the chamber; wherein on the upper and the lower conical funnels (10) are tangentially connected upper intake (21) and lower intake (22) from the unit (X) for bringing the untreated ballast water in; wherein the upper and lower conical funnels (10) comprise upper and lower vortex routers (14) for flow speeding up, a semi permeable barrier (15), an outlet (16) for air bubbles exit, and an outlet (17) for sediment exit, and a sediment router (26) for prevention of sediment retention; the vortex tubes (2) are positioned through the centre of the upper and lower conical funnels (10) and the chamber (9), symmetrically and turned one towards the other, at a distance defined by the system intake parameters; at the ends of the upper and lower vortex tubes (2) are fitted the nozzles (11) with one inlet edge of the nozzle forming a cavitation jet router (12); through the outlet (7) from the chamber (9) exit the air bubbles and particles of the density lesser than water density; through the outlet (8) from the chamber (9) exit particles of the density greater than water density; through the outlet (16) from the upper conical funnel (10) exit the air bubbles; through the outlet (17) from the lower conical funnel (10) exits sediment; in the space between the upper and the lower vortex tubes (2), at the place where two vortices join, the hydrodynamic cavitation and vacuum effect are formed in the point (0); the ballast water passes forming a jet (27), through openings (13) in the upper and the lower nozzles (11) into the upper and the lower vortex tubes (2), and through the upper tube (23), the lower tube (24), and the common outlet (25) of the unit (Y) for taking the treated ballast water away, into ballast water tanks.

3. The system according to Claim 2, **characterised in that** nozzles (18) having been fitted at the ends of the upper and lower vortex tubes (2) comprise several inlet edge of the nozzle (12).

4. The system as claimed in Claims 2 and 3, **characterised in that** the inclination of the cavitation jet router on the nozzles (11) and (18), relative to the nozzle axis of symmetry, is at the angles β = 50° to 70°.

5. The system as claimed in any of Claims 1 - 3, **characterised in that** at the moment of joining of the two vortices in the space between the nozzles of the cylindrical chamber, in the point (0), occurs vacuum effect where the water steam pressure obtains a low value that is proportional to the system intake parameters; in the point (0) occurs mutual action of shear, tension and torsion forces; vacuum spreades further, through the nozzles, from the point (0) into the inner parts of the vortex tube (2), to the points (S and T), where also spreads hydrodynamic cavitation, symmetrically in both vortex tubes (2).

6. The system as claimed in Claims 1 - 3, **characterised in that** the unit (Y) for taking the treated ballast water away from the unit for whirling, hydrodynamic cavitation and vacuum effect comprises the upper tube (23), the lower tube (24) and the common outlet (25) into the ballast water tanks.

7. Use of a system as claimed in Claims 1 - 4, for disinfection, purification or sterilisation of various fluids, and for destruction of various sorts, forms and stages of microorganisms in fluids.

## Patentansprüche

1. Das Ballastwasser-Behandlungssystem, das auf Verwirbelung, hydrodynamischer Kavitation und Vakuumeffekt basiert, bestehend aus der Einheit (U) für Verwirbelung, hydrodynamische Kavitation und Vakuumeffekt, der Einheit (X) zum Einleiten von unbehandeltem Ballastwasser in die Einheit (U) und der Einheit (Y) zum Ableiten von unbehandeltem Ballastwasser aus der Einheit (U), **gekennzeichnet dadurch, dass** die Einheit (U) für Verwirbelung, hydrodynamische Kavitation und Vakuumeffekt aus einer zylindrischen Kammer (1), einem oberen und unteren Wirbelrohr (2), einer oberen und unteren zylindrischen Düse (3), einem Auslass (7) und einem Auslass (8) aus der Kammer besteht; das obere und das untere Wirbelrohr (2) liegen in der Mitte der Kammer (1), sind symmetrisch und in einem durch die Einlassparameter des Systems festgelegten Abstand zueinander gewandt; an den Enden des oberen und unteren Wirbelrohrs (2) sind Düsen (3) angebracht; wobei am oberen und unteren Teil der Kammer (1) tangential der obere Einlass (21) und der untere Einlass (22) aus der Einheit (X) angeschlossen sind, um das unbehandelte Ballastwasser einzuleiten; durch den Auslass (7) aus der Kammer (1) treten Luftblasen (6) und Teilchen mit einer geringeren Dichte als die des Wassers aus; durch den Auslass (8) aus der Kammer (1) treten Partikel aus, deren Dichte größer ist als die des Wassers; im Bereich zwischen dem oberen und dem unteren Wirbelrohr (2), an der Stelle, an der sich zwei Wirbel treffen, bildet sich hydrodynamische Kavitation im Punkt (0); das Ballastwasser strömt in Form eines Strahls (27) durch Öffnungen (4) in der oberen und der unteren Düse (3) in das obere und das untere Wirbelrohr (2) und durch das obere Rohr (23), das untere Rohr (24) und den gemeinsamen Auslass (25) der Einheit (Y) zur Ableitung des Ballastwassers in die Ballastwassertanks.

2. Das Ballastwasser-Behandlungssystem, das auf Verwirbelung, hydrodynamischer Kavitation und Vakuumeffekt basiert, bestehend aus der Einheit (V) für Verwirbelung, hydrodynamische Kavitation und Vakuumeffekt, der Einheit (X) zum Einleiten von unbehandeltem Ballastwasser und der Einheit (Y) zum Ableiten von unbehandeltem Ballastwasser, **gekennzeichnet dadurch, dass** die Einheit (V) für Verwirbelung, hydrodynamische Kavitation und Vakuumeffekt aus einer zylindrischen Kammer (9), einem oberen und einen unteren konischen Trichter (10), einem oberen und unteren Wirbelrohr (2), einem oberen und einen unteren Wirbelführung (14), einer oberen und unteren Düse (11), einer halbdurchlässigen Barriere (15) und einer Sedimentführung (26) zur Verhinderung von Sedimentablagerungen und Auslässen (7, 8, 16, 17) besteht, wobei der obere und untere konische Trichter (10) auf der oberen und unteren Seite der Kammer (9), bzw. teilweise in der Kammer liegen; wobei am oberen und unteren konischen Trichter (10) tangential der obere (21) und untere Einlass (22) aus der Einheit (X) zum Einleiten des Ballastwassers angeschlossen sind; wobei der obere und untere konische Trichter (10) die obere und untere Wirbelführung (14) zur Beschleunigung des Flusses, eine halbdurchlässige Barriere (15), einen Auslass (16) für den Austritt von Luftblasen und einen Auslass (17) für Sedimentaustritt sowie eine Sedimentführung (26) zur Verhinderung von Sedimentablagerungen umfassen; die Wirbelrohre (2) gehen durch die Mitte des oberen und unteren konischen Trichters (10) und der Kammer (9), sind symmetrisch und zueinander gewandt und befinden sich in einem durch die Einlassparameter des Systems festgelegten Abstand; an den Enden des oberen und unteren Wirbelrohrs (2) sind die Düsen (11) angebracht, wobei eine Einlasskante der Düse eine Kavitationsstrahlführung (12) bildet; durch den Auslass (7) aus der Kammer (9) treten die Luftblasen und die Teilchen mit einer geringeren Dichte als die Wasserdichte aus; durch den Auslass (8) aus der Kammer (9) treten die Teilchen mit einer höheren Dichte als die Wasserdichte aus; durch den Auslass (16) aus dem oberen konischen Trichter (10) treten die Luftblasen aus; durch den Auslass (17) des unteren konischen Trichters (10) tritt Sediment aus; im Bereich zwischen dem oberen und dem unteren Wirbelrohr (2), an der Stelle, an der sich zwei Wirbel treffen, bildet sich die hydrodynamische Kavitation und Vakuumeffekt im Punkt (0); das Ballastwasser strömt in Form eines Strahls (27) durch Öffnungen (13) in der oberen und der unteren Düse (11) in das obere und das untere Wirbelrohr (2) und durch das obere Rohr (23), das untere Rohr (24) und den gemeinsamen Auslass (25) der Einheit (Y) zur Ableitung des Ballastwassers in die Ballastwassertanks.

3. Das System gemäß dem Patentanspruch 2, **gekennzeichnet dadurch, dass** die an den Enden des oberen und unteren Wirbelrohrs (2) angebrachten Düsen (18) mehrere Einlasskanten der Düse (12) umfassen.

4. Das System gemäß den Patentansprüchen 2 und 3, **gekennzeichnet dadurch, dass** die Neigung der Kavitationsstrahlführung auf den Düsen (11) und (18) und relativ zur Düsensymmetrieachse bei den Winkeln β = 50° bis 70° liegt.

5. Das System gemäß einem der Ansprüche 1-3, **gekennzeichnet dadurch, dass**, wenn sich die beiden Wirbel im Raum zwischen den Düsen der zylindrischen Kammer im Punkt (0) treffen, der Vakuumeffekt entsteht, bei dem der Wasserdampfdruck einen niedrigen Wert erreicht, der proportional zu den Eingangsparametern des Systems ist; am Punkt (0) entsteht eine gegenseitige Wirkung von Scher-, Zug- und Torsionskräften; das Vakuum breitet sich durch die Düsen vom Punkt (0) in das Innere des Wirbelrohrs (2) zu den Punkten (S und T) aus, wo sich auch die hydrodynamische Kavitation ausbreitet, und zwar symmetrisch in den beiden Wirbelrohren (2).

6. Das System gemäß einem der Ansprüche 1-3, **gekennzeichnet dadurch, dass** die Einheit (Y) zum Ableiten des behandelten Ballastwassers aus der Einheit für Verwirbelung, hydrodynamische Kavitation und Vakuumeffekt das obere Rohr (23), das untere Rohr (24) und den gemeinsamen Auslass (25) in die Ballastwassertanks umfasst.

7. Die Verwendung eines Systems gemäß den Ansprüchen 1 bis 4 zur Desinfektion, Reinigung oder Sterilisation verschiedener Flüssigkeiten und zur Zerstörung verschiedener Arten, Formen und Stadien von Mikroorganismen in Flüssigkeiten.

## Revendications

1. Système de traitement des eaux de ballast reposant sur le tourbillonnage, la cavitation hydrodynamique et l'effet de vide le système comprenant unité (U) pour le tourbillonnage, la cavitation hydrodynamique et l'effet de vide, unité (X) d'introduction des eaux de ballast non-traitées dans unité (U) et
unité (Y) d'extraction des eaux de ballast traitées de l'unité (U), **caractérisé en ce que** l'unité (U) de tourbillonnage, cavitation hydrodynamique et effet de vide comprend chambre cylindrique (1), tubes vortex supérieur et inférieur (2), buses cylindrique supérieure et inférieure (3), sortie (7) et sortie (8) de la chambre; les tubes vortex supérieur et inférieur (2) traversent le centre de la chambre (1), symétriquement et sont tournés l'un envers l'autre, à une distance définie par les paramètres d'entrée du système; aux extrémités des tubes vortex supérieur et inférieur (2) se trouvent les buses (3); où
les parties supérieure et inférieure de la chambre (1) sont tangentiellement connectées à l'entrée supérieure (21) et l'entrée inférieure (22) de l'unité (X) d'introduction des eaux de ballast non-traitées; par la sortie (7) de la chambre (1) sont évacuées les bulles d'air (6) et les particules de densité plus faible que celle de l'eau; par la sortie (8) de la chambre (1) sont évacuées les particules de densité plus forte que celle de l'eau; dans l'espace entre les tubes vortex supérieur et inférieur (2), au point où les deux tourbillons se rejoignent, la cavitation hydrodynamique se forme au point (0); les eaux de ballast passent en formant jet (27), par les ouvertures (4) des buses supérieure et inférieure (3) dans les tubes vortex supérieur et inférieur (2), et par le tube supérieur (23), tube inférieur (24), et la sortie commune (25) de l'unité (Y) d'extraction des eaux de ballast, dans des citernes d'eau de ballast.

2. Système de traitement des eaux de ballast reposant sur le tourbillonnage, la cavitation hydrodynamique and l'effet de vide le système comprenant unité (V) pour le tourbillonnage, la cavitation hydrodynamique et l'effet de vide, unité (X) d'introduction des eaux de ballast non-traitées et a unité (Y) d'extraction des eaux de ballast traitées, **caractérisé en ce que** l'unité (V) de tourbillonnage, la cavitation hydrodynamique et l'effet de vide comprend chambre cylindrique (9), entonnoirs coniques supérieur et inférieur (10), tubes vortex supérieur et inférieur (2), toupies vortex supérieure et inférieure (14), buses supérieure et inférieure (11), membrane semi-perméable (15), toupie sédiments (26) pour prévenir la rétention du sédiment et, sorties (7, 8, 16, 17), où the entonnoirs coniques supérieur et inférieur (10) sont placés sur les côtés supérieur et inférieur de la chambre (9), partiellement dans la chambre;
où
sur les entonnoirs coniques supérieur et inférieur (10) sont tangentiellement connectées entrée supérieure (21) et entrée inférieure (22) de l'unité (X) d'introduction des eaux de ballast non-traitées; où
entonnoirs coniques supérieur et inférieur (10) comprend
toupies vortex supérieure et inférieure (14) pour flux en accélération, 2, membrane semi-perméable (15), sortie (16) pour les bulles d'air, et sortie (17) pour le sédiment, et
toupie sédiments (26) pour prévenir la rétention du sédiment; les tubes vortex (2) traversent le centre des entonnoirs coniques supérieur et inférieur (10) et de la chambre (9), symétriquement
et sont tournés l'un envers l'autre, à une distance définie par les paramètres d'entrée du système; aux extrémités des tubes vortex supérieur et inférieur (2) se trouvent les buses (11) avec une arête d'entrée de la buse formant la toupie du jet de cavitation (12); par la sortie (7) de la chambre (9) sont évacuées les bulles d'air et les particules de densité plus faible que celle de l'eau; par la sortie (8) de la chambre (9) sont évacuées les particules de densité plus forte que celle de l'eau; par la sortie (16) de l'entonnoir conique supérieur (10) sortent les bulles d'air; par la sortie (17) de l'entonnoir conique inférieur (10) sortent les sédiments ; dans l'espace entre les tubes vortex supérieur et inférieur (2), au point où les deux tourbillons se rejoignent, la cavitation hydrodynamique se forment au point (0); les eaux de ballast passent en formant jet
(27), par les ouvertures (13) des buses supérieure et inférieure (11) dans les tubes vortex supérieur et inférieur (2), et par le tube supérieur (23), le tube inférieur (24), et la sortie commune (25) de l'unité (Y) d'extraction des eaux de ballast traitées, dans des citernes d'eau de ballast.

3. Le système suivant la Revendication 2, **caractérisé en ce que** dans les buses (18) qui ont été
installées aux extrémités des tubes vortex supérieur et inférieur (2) comprennent plusieurs arêtes d'entrée de buse (12).

4. Le système suivant les Revendications 2 et 3, **caractérisé en ce que** dans l'inclination du
router du jet de cavitation sur les buses (11) et (18), par rapport à l'axe de symétrie de buse, est aux angles β = 50° à 70°.

5. Le système suivant les Revendications 1-3, **caractérisé en ce que** dans au moment où se rejoignent les deux tourbillons dans l'espace entre les buses de la chambre cylindrique, au point (0), se forme l'effet de vide où la pression de vapeur d'eau obtient une valeur basse qui est proportionnelle aux paramètres d'entrée du système; au point (0) se forme une action mutuelle des forces de cisaillement, tension et torsion; le vide se propage, par les buses, du point (0) dans les parties intérieures du tube vortex (2), aux points (S et T), où aussi se propage la cavitation hydrodynamique, symétriquement dans les deux tubes vortex (2).

6. Le système suivant les Revendications 1 - 3, **caractérisé en ce que** dans l'unité (Y) de
prise des eaux de ballast traitées depuis l'unité de tourbillonnage, cavitation hydrodynamique et effet de vide comprend le tube supérieur (23), le tube inférieur (24) et la sortie commune (25) dans des citernes d'eau de ballast.

7. L'utilisation du system suivant les Revendications 1-4, pour la désinfection, l'épuration ou la stérilisation de divers liquides, et pour l'élimination des diverses sortes, formes et phases des microorganismes dans les liquides.
